# EUROPEAN PATENT SPECIFICATION

(11) **EP 2 698 892 B1**
(45) Date of publication and mention of the grant of the patent: **11.07.2018**
(21) Application number: 12405084.0
(22) Date of filing: 13.08.2012
(51) Int. Cl.: H01H 85/12, H02H 7/12, H02H 3/087, H02H 7/122

(54) **DC overcurrent protection device**
DC Überstromschutzvorrichtung
Dispositif de protection DC contre les surintensités

(43) Date of publication of application: 19.02.2014
(73) Proprietor: DET International Holding Limited, George Town, Grand Cayman (KY)
(72) Inventor: Cenic, Ljiljan, 79312 Emmendingen (DE); Walliser, Dietmar, 79312 Emmendingen (DE)
(74) Representative: Keller & Partner Patentanwälte AG

(56) References cited:
- EP-A2- 1 267 465
- US-A1- 2009 109 590
- US-A1- 2009 310 270
- US-B1- 6 583 977

## Description

### Technical Field

The invention relates to an overcurrent protection device for protection of an electric power system against overcurrents, comprising a first current path with a first fuse, a second current path with a second fuse, wherein the first current path and the second current path are connected in parallel between an input and an output of the overcurrent protection device. Furthermore, the invention relates to a method for protecting an electric power system against overcurrents.

### Background Art

In electrical power systems, short circuits can lead to overcurrent situations during which excessive currents - also called overcurrents -, which exceed the allowable nominal currents of the electrical power systems, occur. According to the corresponding standards, solar inverters - as an example for electrical power systems - have to be able to deal with overcurrents of up to 150% of their nominal currents. Using only one fuse to protect such a solar inverter in an overcurrent situation is not sufficiently safe because one single fuse is not guaranteed to interrupt quickly enough and to stop the overcurrent flowing through the device. This can lead to overheating of components in the device above allowed maximum temperatures and to destruction of such components.

JP 2011010483 A describes a current separator and current breaking device that comprises a plurality of parallel current paths and fuses.

DE 196 39 279 A1describes a protection circuit for a disengageable semiconductor device comprising several parallel current paths with a plurality of fuses, diodes and transistors.

US 2009/109590 A1 discloses a solid-state switching device comprising two (or more) branches connected in parallel between an input and an output of the device and each branch including a power commutator switch connected in series with a fuse. The device further comprises a current sensor connected to a control which controls the switching of the switches in dependency of the current sensed by the current sensor. In the case of a failure, the measured current exceeds the permitted maximum main current and the control opens the switches.

### Summary of the invention

It is the object of the invention to create an overcurrent protection device pertaining to the technical field initially mentioned, that is simple, robust and inexpensive and that is able to detect failure conditions - in particular overcurrent situations - and to perform quick and safe shutdowns of electric power systems protected by the overcurrent protection device.

The solution of the invention is specified by the features of claim 1. According to the invention, in an overcurrent protection device for protection of an electric power system, in particular an inverter, against overcurrents , wherein the overcurrent protection device comprises a first current path comprising a first fuse and a second current path comprising a second fuse, wherein the first current path and the second current path are connected in parallel between an input of and an output the overcurrent protection device, a first current control element is arranged in the second current path, wherein the first current control element is configured to be closed - or conductive, or ON - in a normal operation mode, such that a resulting resistance of the second current path essentially corresponds to a resulting resistance of the first current path, and the first current control element is configured to be opened - or non-conductive, or OFF - in an overcurrent situation, such that the resulting resistance of the second current path is substantially - at least 10 times, preferably at least 30 times, more preferably at least 50 times, most preferably at least 65 times - higher than the resulting resistance of the first current path.

Such an overcurrent protection device has the advantage that it offers a solution for current control in an overcurrent situation that it is comparably simple, robust and inexpensive. In addition to that, such a device configuration can be realized with commercially available parts at reasonable costs.

In a preferred embodiment, the overcurrent protection device is configured such that, in a situation where an overcurrent occurs, essentially the entire overcurrent first flows through the first fuse, causing the first fuse to interrupt, and after the first fuse has interrupted, essentially the entire overcurrent flows through the second fuse, causing the second fuse to interrupt. Such a device configuration has the advantage that the first and the second fuses interrupt in a controlled, reliable and quick manner once a current supplied to the input of the overcurrent protection device exceeds an allowable value. It is, however also possible to configure the overcurrent protection device differently, for example such that in an overcurrent situation essentially the entire or at least a larger part of the overcurrent first flows through the second fuse.

In a preferred embodiment, the overcurrent protection device comprises a third current path comprising a third fuse. Using a third fuse in addition to the first and the second fuse has the advantage that the reliability of the overcurrent protection device can be further improved, for example because the breaking currents of the three fuses can be reduced compared to a configuration with only two fuses. However, it is of course also possible to use only two fuses, for example for cost reduction reasons. In a further typical embodiment, the overcurrent protection device comprises more than three fuses, for example, four, five or yet six fuses. Using more than six fuses is of course also possible.

In a preferred embodiment, a second current control element is arranged in the third current path, wherein the second current control element is configured to be closed in a normal operation mode, such that a resulting resistance of the third current path essentially corresponds to a resulting resistance of the first current path and the second current path, and the second current control element is configured to be opened in an overcurrent situation, such that the third current path is at least temporarily interrupted. In a preferred embodiment, the overcurrent protection device is configured such that, in a situation where an overcurrent occurs, the third fuse interrupts only after the second fuse has interrupted. It is particularly preferred if essentially no current flows through the third fuse as long as the second fuse has not interrupted and essentially all overcurrent flows through the third fuse once the second fuse has interrupted, quickly also causing the third fuse to interrupt. This has the advantage that the reliability of the overcurrent protection device is further improved. However, it is theoretically also possible that the third fuse and the second fuse interrupt at approximately the same time and/or that a part of the overcurrent already starts flowing through the third fuse while the second fuse has not yet fully interrupted. In this context "quickly" is to be understood as "quicker than 500 ms", preferably "quicker than 100 ms", more preferably "quicker than 50 ms", most preferably "quicker than 20 ms". In typical embodiments, the blowing times of all fuses are essentially the same. In further typical embodiments, all fuses have the same nominal amperage.

In a typical embodiment, the third current path is connected in parallel with the first current path and the second current path and/or the third fuse is connected in parallel with the first fuse and the second fuse. This means that the three fuses are preferably connected in parallel to the input of the overcurrent protection device. Such a configuration has the advantage to make it comparably easy to configure the overcurrent protection device such that the three fuses interrupt one after the other. However, it is of course also possible to arrange the third fuse in a different way, for example in series with the first and/or the second fuse or yet separated from the first and/or the second fuse by at least one other component.

In a preferred embodiment, a resistor is connected in series with the first fuse in the first current path. Such a resistor has the advantage that it can be used to adjust the current flowing through the first fuse during normal operation and therefore to indirectly tune the current distribution in the overcurrent device in particular in the three fuses. In a typical embodiment, the resistor is dimensioned such that - in normal operation, i.e. at times when no overcurrent occurs at the input of the overcurrent protection device - equal currents flow through the three fuses. However, the connection of the resistor in series with the first fuse is not absolutely mandatory. The resistor could also be omitted or replaced by another component, for example a diode.

In a preferred embodiment, the first current control element is a first transistor and is connected in series with the second fuse. Such a first transistor has the advantage that it can be used to cut the current flowing through the second fuse, in particular in an overcurrent situation, and to therefore force the entire overcurrent to flow through other components of the overcurrent protection device, in particular through the first fuse and/or the second fuse. The first transistor is typically a field effect transistor but can also be of another type or be replaced by a switch or a circuit breaker. However, any component used in this context must be able to interrupt the current flowing through the second fuse in an overcurrent situation quickly enough to prevent the second fuse from interrupting before the first fuse has interrupted.

In a preferred embodiment, a bypass diode is connected in parallel with the first current control element. Such a bypass diode has the advantage that, when the first fuse has interrupted and the first current control element is switched off, a current path around the first current control element is available to the overcurrent which will then essentially entirely flow through the second fuse and the bypass diode. In this situation, the second fuse will typically also interrupt quickly. Another advantage of the bypass diode is that as long as the first fuse has not yet interrupted, essentially no current will flow through the second fuse in an overcurrent situation because of the otherwise occurring voltage drop over the bypass diode.

In a typical embodiment, the second current control element is a second transistor and is connected in series with the third fuse. Such a second transistor has the advantage that it can be used to cut the current flowing through the third fuse, in particular in an overcurrent situation, and to therefore force the entire overcurrent to flow through other components of the overcurrent protection device, in particular through the first fuse and/or the second fuse. The second transistor is typically a field effect transistor but can also be of another type or be replaced by a switch or a circuit breaker. However, any component used in this context must be able to interrupt the current flowing through the third fuse in an overcurrent situation quickly enough to prevent the third fuse from interrupting before the first fuse and/or the second fuse has/have interrupted.

In a preferred embodiment, the overcurrent protection device is configured such that at least the first current control element and/or the second current control element is/are operated by a housekeeper voltage of an electric power system sought to be protected by the overcurrent protection device. Such a configuration guarantees in a simple and reliable manner that the current path(s) through the second fuse and/or the first fuse is/are interrupted at the beginning of an overvoltage situation and essentially the entire overcurrent first flows through the first fuse, quickly causing the first fuse to interrupt, because the housekeeper voltage will typically quickly (i. e. approximately 1 s) loose its supply as soon as an overvoltage situation, in particular a short-circuit at the input of the device. However, the current control elements do not have to be operated by such a housekeeper voltage. It is rather also possible to arrange for current control elements to be turned off in another way as soon as an overvoltage situation occurs, for example through current measurements.

In a particularly preferred embodiment, the overcurrent protection device is configured such that the first current control element and/or the second current control element is/are conductive - or ON, or closed - when the housekeeper voltage is ON. This configuration is particularly advantageous because it allows a simple and straightforward link between the housekeeper voltage and the conductivity of the current control elements. However, other configurations, for example making the current control elements conductive when the housekeeper voltage is off and to arrange the current control elements differently, are in principle also possible.

In typical embodiments, a gate of the first current control element and/or a gate of the second current control element are connected to a housekeeper voltage input. This has the advantage to further improve and to facilitate the dependency between the conductivity of the current control elements and the housekeeper voltage.

In a preferred embodiment, the gate of the first current control element and/or the gate of the second current control element is/are connected to the housekeeper voltage input via a connection diode and/or a connection Zener-diode and/or a connection resistor. The connection diode and/or the connection Zener-diode and/or the connection resistor are preferably connected in series. However, they can also be connected differently, for example in a combination of series and parallel connections. The resistor is preferably a connection, typically a series connection, of multiple, typically four, single resistors. Such a configuration with a connection diode and/or a connection Zener-diode and/or a connection resistor has the advantage that a voltage divider can be established - typically in connection with further elements - which is typically configured to supply an appropriate operating voltage and/or gate voltage to at least one of the current control elements.

In typical embodiments, the overcurrent protection device comprises a compensation resistor and/or a compensation capacitor, typically arranged in parallel between a current control element control node of at least one current control element and the output of the overcurrent protection device. Such a compensation resistor and/or a compensation capacitor has/have the advantage to prevent voltage glitches between the current control element control node and the output of the overcurrent protection device and by therefore accidentally turning one or more current control elements off.

In a method according to the invention, an input current flows at least partially through a first current path comprising a first fuse (2.1) and at least partially through a second current path comprising a second fuse (2.2). In a normal operation mode, a first current control element (4.1) in the second current path is closed such that the current is distributed essentially equally between the two current paths, and, in an overcurrent situation, the first current control element (4.1) is opened such that essentially the entire current flows through the first current path.

In a preferable method according to the invention, when an overcurrent occurs at an input of the electric power system, a second fuse interrupts only after the first fuse has interrupted. In particular, in an overcurrent situation essentially the entire overcurrent typically first flows through the first fuse, causing the first fuse to interrupt. When the first fuse has interrupted, essentially the entire overcurrent typically then flows through the second fuse, causing the second fuse to interrupt. This has the advantage that the two fuses are blown out one after another in a controlled and reliable manner.

In a particularly preferred method, a third fuse only interrupts after the second fuse has interrupted. In particular, in an overcurrent situation essentially the entire overcurrent typically first flows through the first fuse and the second fuse, causing the first fuse and the second fuse to interrupt. When the first fuse and the second fuse have interrupted, essentially the entire overcurrent typically then flows through the third fuse, causing also the third fuse to interrupt. This has the advantage that all three fuses are blown out one after another in a controlled and reliable manner.

Other advantageous embodiments and combinations of features come out from the detailed description below and the totality of the claims.

### Brief description of the drawings

The drawings used to explain the embodiments shows:
- Fig. 1:: A schematic view of an overcurrent protection device according to the invention;
- Fig. 2:: a schematic view of a photovoltaic system comprising an overcurrent protection device according to the invention.

In the figure, the same components are given the same reference symbols.

### Preferred embodiments

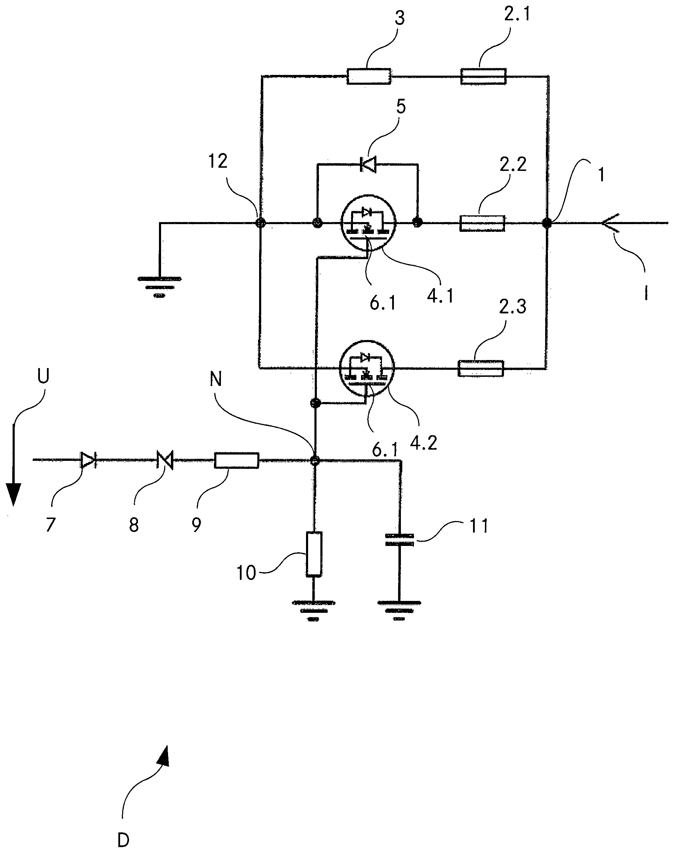

Figure 1 shows a schematic view of an overcurrent protection device D according to the invention. The overcurrent protection device D comprises an input 1 and an output 12. Connected in parallel between the input 1 and the output 12 are a first fuse 2.1, a second fuse 2.2 and a third fuse 2.3. The fuses typically all have a nominal current of 16A. However, they can also have different nominal currents whereby the nominal currents can be the same for each fuse or for two fuses or yet different for all three fuses. A resistor 3 is connected in series with the first fuse 2.1. The resistor 3 is typically a 2 mOhm resistor. A first transistor 4.1 is connected in series with the second fuse 2.2. A second transistor 4.2 is connected in series with the third fuse 2.3. A bypass diode 5 is connected in parallel with the first transistor 4.1. The connections of the resistor 3, the bypass diode 5, the first transistor 4.1 and the second transistor 4 .2 that are located opposite the three fuses 2.1, 2.2 and 2.3 are connected to the output 12. The gate 6.1 of the first transistor 4.1 and the gate 6.2 of the second transistor 4.2 are connected to a transistor control node N. The transistor control node N is connected to the housekeeper voltage U via a series connection of a connection diode 7, a connection Zener-diode 8 and a connection resistor 9. The connection resistor 9 can be a series connection or a parallel connection of multiple single resistors, for example four single 200 kOhm resistors. The connection Zener-diode typically has a breakdown voltage of 4.7 Volts. The transistor control node N is connected to ground and/or the output 12 via a compensation resistor 10 and a compensation capacitor 11 connected in parallel. The compensation resistor 10 can be a series connection or a parallel connection of multiple single resistors, for example two single 301 kOhm resistors. The compensation capacitor 11 is typically a 10 nF capacitor.

In normal operation, the current I entering the overcurrent protection device D through the input 1 is the nominal current. In this case, all three fuses 2.1, 2.2 and 2.3 share the nominal current equally. If, for example, the nominal current equals 34 A, the current flowing through each fuse 2.1, 2.2 and 2.3 equals 11.33 A. Choosing a nominal value of 16 A for each fuse 2.1, 2.2 and 2.3 for normal operation is therefore an appropriate choice. In this case of normal operation, the transistors 4.1 and 4.2 are turned ON by the housekeeper voltage U. The purpose of the resistor 3 is to compensate residual resistances of the transistors 4.1 and 4.2 and to thereby make sure that the current I is equally shared in normal operation.

In the case of an overcurrent situation, for example caused by a short circuit on the input 1 of the overcurrent protection device D, the current I will equal up to 150% of the nominal current. In the described case where the nominal current equals 34 A (see above), the overcurrent protection device D has to deal with an overcurrent of 51 A flowing into its input 1 (1.5 * 34 A = 51 A). This overcurrent will flow through all three fuses 2.1, 2.2 and 2.3 equally as long as the housekeeper voltage U that keeps transistors 4.1 and 4.2 turned ON is maintained. However, since there is a short circuit on input of the overcurrent protection device D, the housekeeper voltage U will quickly loose its supply (typically in approximately 1 second) and the transistors 4.1 and 4.2 will be switched OFF. The voltage drop of the bypass diode 5 is typically more than 0.7 V. Therefore, at the beginning of the overcurrent situation, all overcurrent will flow through the first fuse 2.1. Since a current of 51 A is now flowing through a 16 A fuse, the first fuse 2.1 will interrupt quickly. As soon as this interruption of the first fuse 2.1 has occurred, all overcurrent will flow through the second fuse 2.2 since there is no other path available. The second fuse 2.2 will also interrupt quickly. As soon as this interruption of the second fuse 2.2 has occurred, the overcurrent will try to flow through the third fuse 2.3 but since the transistor 4.2 is switched OFF, no current will flow through the third fuse 2.3. Instead, a voltage will start to build up on the transistor 4.2. The transistor 4.2 is typically a high current, low voltage (30 V) transistor. Therefore, it will not be able to withstand high input voltages, and it will make short. When this happens, the overcurrent will start to flow through the transistor 4.2 and the third fuse 2.3, causing also the third fuse 2.3 to interrupt. When this has happened, all three fuses 2.1, 2.2 and 2.3 are open, voltages on them are high and no current is flowing through the overcurrent protection device D and through an electric power system (not shown in Figure 1) protected by the overcurrent protection device D anymore.

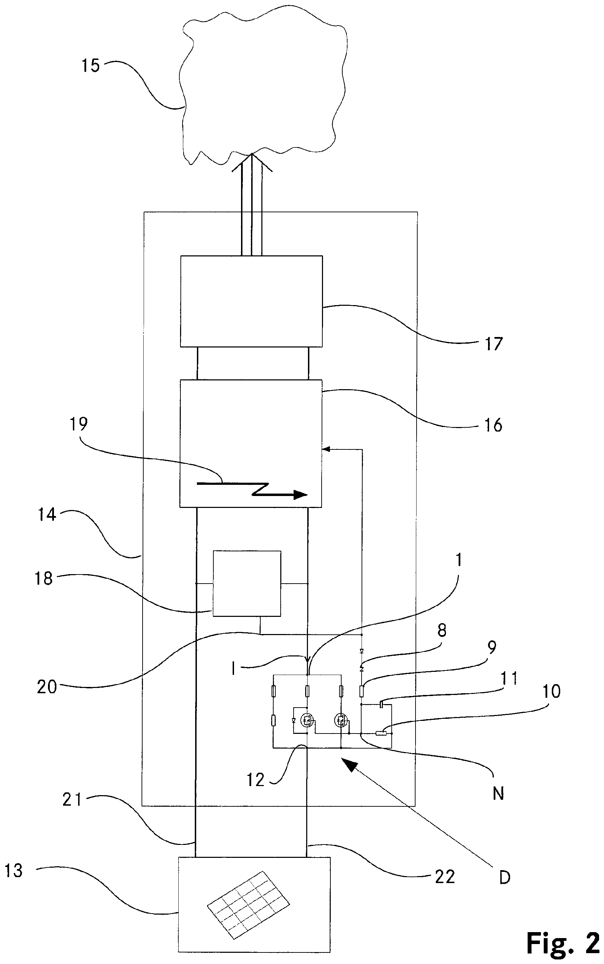

Figure 2 shows a schematic view of a photovoltaic system comprising an overcurrent protection device D according to the invention. In this system, a photovoltaic (PV) array 13 is connected to a grid 15 via a connection unit 14. The connection unit 14 comprises a DC/DC converter 16 which can be of buck or of boost type, typically a buck-boost converter. An output of the DC/DC converter 16 is connected to an input of a DC/AC inverter 17 which transforms the direct current produced by the PV array 13 into an alternating current and feeds the latter into the grid 15. The PV array 13 is connected to the input of the DC/DC converter 16 via a positive line 21 and a negative line 22. In further, the connection unit 14 comprises a housekeeper 18 which is used as an auxiliary power supply for different components of the connection unit 14 and supplies the housekeeper voltage U at its housekeeper output 20. The housekeeper 18 is typically electrically connected between the positive line 21 and the negative line 22. An overcurrent protection device D according to the invention is typically connected in the negative line 22 between the DC/DC converter 16 and the PV array 13. During normal operation, a current I entering the overcurrent protection device D at its input 1 flows through the overcurrent protection device D and leaves it at its output 12. In an overcurrent situation, which can - for example - be caused by a short 19 occurring at the input of the DC/DC converter 16, the current I typically becomes too elevated and the fuses 2.1, 2.2 and 2.3 of the overcurrent protection device D blow as described above.

During normal operation, the voltage available to housekeeper 18 between the positive line 21 and the negative line 22 is typically situated between 400 V and 1000 V. The housekeeper 18 typically converts this voltage to lower value (typically 13 V), and supplies it via one or more housekeeper outputs 20 as a housekeeper voltage U to internal control circuits (not shown) of the connection unit 14 and to the overcurrent protection device D.

The connection Zener-diode 8 - for example with a voltage drop of 4.7 V -, the connection resistor 9 - for example a series connection of 4*200 kΩ - and the compensation resistor 10- for example a series connection of 2*301 kΩ- represent a voltage divider, bringing a voltage U_{N,12} between the transistor control node N and the output 12 of the overcurrent protection device D to U_{N,12} =(13-0.7-4.7)V*2*301kΩ(2*301+4*200)kΩ =3.26V. This voltage is enough to keep transistors 4.1 and 4.2 turned ON.

The compensation capacitor 11 is used to prevent any glitches in the U_{N,12} voltage from accidentally switching transistors 4.1 and 4.2 OFF and from therefore mistakenly activating the overcurrent protection device D. A time constant of the parallel connection of the compensation resistor 10 and the compensation capacitor 11 is chosen to equal 6ms in this preferred embodiment of the overcurrent protection device D. This is enough to avoid glitches from one side of the overcurrent protection device D, while still maintaining a quick enough reaction in case of failure, i. e. an excessive current from other side of the overcurrent protection device D.

Still referring to figure 2, when a short 19 occurs at the input of the DC/DC converter 16 the housekeeper 18 typically looses its supply voltage, i.e. U_{21,22}→0V. Therefore, a voltage drop U_{20,12} between the housekeeper output 20 and the output 12 of the overcurrent protection device D also quickly disappears, i. e. U_{20,12}→0V. After a few milliseconds, the voltage drop between the transistor control node N and the output 12 of the overcurrent protection device D also disappears, U_{N,12}→0V. The transistors 4.1 and 4.2 are therefore turned OFF and the fuses 2.1, 2.2 and 2.3 of the overcurrent protection device D blow one by one. After the last fuse 2.3 has blown, voltages U_{1,12} (i. e. voltage drop between input 1 and output 12 of the overcurrent protection device D) and U_{20,12} jump from 0V to U_{PV} (open-loop output voltage of the PV array 13). In this situation, housekeeper 18, control circuits and DC/DC converter 16 are all isolated against PE (protective earth).

To prevent any high current from flowing throughout the connection resistor 10 during an overcurrent situation, it is advantageous to arrange for a high resulting resistance of connection resistor 10, e. g. 800kQ. The connection resistor 10 typically consists of at least four SMD resistors (size 1210) in series. Each such SMD resistor can typically survive at least 200 V and a power of 0.5 W. The current flowing through the connection resistor 10 in an overcurrent situation can then for example be in the range of 1.25 mA, and a power dissipation on each SMD resistor can equal 0.312 W.

The invention is not limited to the preferred embodiment described above. The scope of protection is rather defined by the patent claims.

## Claims

1. Overcurrent protection device (D) for protection of an electric power system, in particular an inverter, against overcurrents, wherein the overcurrent protection device (D) comprises
a) a first current path comprising a first fuse (2.1),
b) a second current path comprising a second fuse (2.2),
wherein
c) the first current path and the second current path are connected in parallel between an input (1) and an output (12) of the overcurrent protection device (D),
d) a first current control element (4.1) is arranged in the second current path, wherein the first current control element (4.1) is configured to be closed in a normal operation mode and the first current control element (4.1) is configured to be opened in an overcurrent situation, and wherein the first current control element (4.1) is a transistor and is connected in series with the second fuse (2.2),
**characterized in that**
e) a bypass diode (5) is connected in parallel with the first current control element (4.1) such that, when the first fuse has interrupted and the first current control element (4.1) is switched off, a current path around the first current control element (4.1) is available to the overcurrent, and
f) the overcurrent protection device (D) is configured such that, in a situation where an overcurrent occurs, essentially the entire overcurrent first flows through the first fuse (2.1), causing the first fuse (2.1) to interrupt, and after the first fuse (2.1) has interrupted, essentially the entire overcurrent flows through the second fuse (2.2), causing the second fuse (2.2) to interrupt.

2. Overcurrent protection device (D) according to claim 1, **characterized in that** the overcurrent protection device (D) comprises a third current path comprising a third fuse (2.3).

3. Overcurrent protection device (D) according to claim 2, **characterized in that** a second current control element (4.2) is arranged in the third current path, wherein the second current control element (4.2) is configured to be closed in a normal operation mode and the second current control element (4.2) is configured to be opened in an overcurrent situation.

4. Overcurrent protection device (D) according to any of the claims 2 to 3, **characterized in that** the overcurrent protection device (D) is configured such that, in a situation where an overcurrent occurs, the third fuse (2.3) interrupts only after the second fuse (2.2) has interrupted.

5. Overcurrent protection device (D) according to any of the claims 2 to 4, **characterized in that** the third current path is connected in parallel with the first current path and the second current path and/or the third fuse (2.3) is connected in parallel with the first fuse (2.1) and the second fuse (2.2).

6. Overcurrent protection device (D) according to any of the previous claims, **characterized in that** a resistor (3) is connected in series with the first fuse (2.1).

7. Overcurrent protection device (D) according to any of the claims 3 to 6, **characterized in that** the second current control element (4.2) is a transistor and is connected in series with the third fuse (2.3).

8. Overcurrent protection device (D) according to any of the claims 3 to 7, **characterized in that** the overcurrent protection device (D) is configured such that the first current control element (4.1) and/or the second current control element (4.2) is/are operated by a housekeeper voltage (U) .

9. Overcurrent protection device (D) according to claim 8, **characterized in that** the overcurrent protection device (D) is configured such that the first current control element (4.1) and/or the second current control element (4.2) are conductive when the housekeeper voltage (U) is on.

10. Overcurrent protection device (D) according to any of the claims 8 to 9, **characterized in that** a gate (6.1) of the first current control element (4.1) and/or a gate (6.2) of the second current control element (4.2) are connected to a housekeeper voltage (U) input.

11. Overcurrent protection device (D) according to claim 10, **characterized in that** the gate (6.1) of the first current control element (4.1) and/or the gate (6.2) of the second current control element (4.2) are connected to the housekeeper voltage (U) input via a connection diode (7) and/or a connection Zener-diode (8) and/or a connection resistor (9).

12. Overcurrent protection device (D) according to any of the previous claims **characterized in that** the overcurrent protection device (D) comprises a compensation resistor (10) and/or a compensation capacitor (11).

13. Method for protecting an electric power system, in particular an inverter, against overcurrents, wherein an input current flows at least partially through a first current path comprising a first fuse (2.1) and at least partially through a second current path comprising a second fuse (2.2), wherein in a normal operation mode, a first current control element (4.1) in the second current path is closed such that the current is distributed essentially equally between the two current paths, and, in an overcurrent situation, the first current control element (4.1) is opened such that essentially the entire current flows through the first current path, causing the first fuse (2.1) to interrupt, and after the first fuse (2.1) has interrupted, essentially the entire overcurrent flows through the second fuse (2.2), causing the second fuse (2.2) to interrupt and wherein the first current control element (4.1) is a transistor and is connected in series with the second fuse (2.2), **characterized in that** a bypass diode (5) is connected in parallel with the first current control element (4.1) such that; when the first fuse has interrupted and the first current control element (4.1) is switched off, a current path around the first current control element (4.1) is available to the overcurrent.

14. Method according to claim 13, **characterized in that** a third fuse (2.3) only interrupts after the second fuse (2.2) has interrupted.

## Patentansprüche

1. Überstromschutzvorrichtung (D) zum Schutz eines Stromversorgungssystems, insbesondere eines Wechselrichters, vor Überstrom, wobei die Überstromschutzvorrichtung (D) Folgendes umfasst:
a) einen ersten Stromweg mit einer ersten Sicherung (2.1),
b) einen zweiten Stromweg mit einer zweiten Sicherung (2.2),
wobei
c) der erste und der zweite Stromweg zwischen einem Eingang (1) und einem Ausgang (12) der Überstromschutzvorrichtung (D) parallelgeschaltet sind,
d) ein erstes Stromregelelement (4.1) in dem zweiten Stromweg angeordnet ist, wobei das erste Stromregelelement (4.1) so konfiguriert ist, dass es bei einem normalen Betriebsmodus geschlossen ist, und das erste Stromregelelement (4.1) so konfiguriert ist, dass es bei einer Überstromsituation geöffnet wird, und wobei es sich bei dem ersten Stromregelelement (4.1) um einen Transistor handelt, der mit der zweiten Sicherung (2.2) in Reihe geschaltet ist,
**dadurch gekennzeichnet, dass**
e) eine Bypass-Diode (5) mit dem ersten Stromregelelement (4.1) parallelgeschaltet ist, so dass, wenn die erste Sicherung unterbrochen hat und das erste Stromregelelement (4.1) ausgeschaltet ist, für den Überstrom ein um das erste Stromregelelement (4.1) herum führender Stromweg zur Verfügung steht, und
f) die Überstromschutzvorrichtung (D) so konfiguriert ist, dass bei einer Situation, in der ein Überstrom auftritt, im Wesentlichen der gesamte Überstrom zuerst durch die erste Sicherung (2.1) fließt, wodurch die erste Sicherung (2.1) unterbricht, und, nachdem die erste Sicherung (2.1) unterbrochen hat, im Wesentlichen der gesamte Überstrom durch die zweite Sicherung (2.2) fließt, wodurch die zweite Sicherung (2.2) unterbricht.

2. Überstromschutzvorrichtung (D) nach Anspruch 1, **dadurch gekennzeichnet, dass** die Überstromschutzvorrichtung (D) einen dritten Stromweg mit einer dritten Sicherung (2.3) umfasst.

3. Überstromschutzvorrichtung (D) nach Anspruch 2, **dadurch gekennzeichnet, dass** ein zweites Stromregelelement (4.2) in dem dritten Stromweg angeordnet ist, wobei das zweite Stromregelelement (4.2) so konfiguriert ist, dass es bei einem normalen Betriebsmodus geschlossen ist, und das zweite Stromregelelement (4.2) so konfiguriert ist, dass es bei einer Überstromsituation geöffnet wird.

4. Überstromschutzvorrichtung (D) nach einem der Ansprüche 2 und 3, **dadurch gekennzeichnet, dass** die Überstromschutzvorrichtung (D) so konfiguriert ist, dass die dritte Sicherung (2.3) bei einer Situation, in der ein Überstrom auftritt, erst dann unterbricht, wenn die zweite Sicherung (2.2) unterbrochen hat.

5. Überstromschutzvorrichtung (D) nach einem der Ansprüche 2 bis 4, **dadurch gekennzeichnet, dass** der dritte Stromweg mit dem ersten Stromweg und dem zweiten Stromweg und/oder die dritte Sicherung (2.3) mit der ersten Sicherung (2.1) und der zweiten Sicherung (2.2) parallelgeschaltet ist.

6. Überstromschutzvorrichtung (D) nach einem der vorhergehenden Ansprüche, **dadurch gekennzeichnet, dass** ein Widerstand (3) mit der ersten Sicherung (2.1) in Reihe geschaltet ist.

7. Überstromschutzvorrichtung (D) nach einem der Ansprüche 3 bis 6, **dadurch gekennzeichnet, dass** es sich bei dem zweiten Stromregelelement (4.2) um einen Transistor handelt, der mit der dritten Sicherung (2.3) in Reihe geschaltet ist.

8. Überstromschutzvorrichtung (D) nach einem der Ansprüche 3 bis 7, **dadurch gekennzeichnet, dass** die Überstromschutzvorrichtung (D) so konfiguriert ist, dass das erste Stromregelelement (4.1) und/oder das zweite Stromregelelement (4.2) über eine Housekeeper-Spannung (U) betrieben wird/werden.

9. Überstromschutzvorrichtung (D) nach Anspruch 8, **dadurch gekennzeichnet, dass** die Überstromschutzvorrichtung (D) so konfiguriert ist, dass das erste Stromregelelement (4.1) und/oder das zweite Stromregelelement (4.2) bei anliegender Housekeeper-Spannung (U) leitend sind.

10. Überstromschutzvorrichtung (D) nach einem der Ansprüche 8 und 9, **dadurch gekennzeichnet, dass** ein Gate (6.1) des ersten Stromregelelements (4.1) und/oder ein Gate (6.2) des zweiten Stromregelelements (4.2) mit einem Eingang für eine Housekeeper-Spannung (U) verbunden sind.

11. Überstromschutzvorrichtung (D) nach Anspruch 10, **dadurch gekennzeichnet, dass** das Gate (6.1) des ersten Stromregelelements (4.1) und/oder das Gate (6.2) des zweiten Stromregelelements (4.2) über eine Verbindungsdiode (7) und/oder eine Zener-Verbindungsdiode (8) und/oder einen Verbindungswiderstand (9) an den Eingang für eine Housekeeper-Spannung (U) angeschlossen sind.

12. Überstromschutzvorrichtung (D) nach einem der vorhergehenden Ansprüche, **dadurch gekennzeichnet, dass** die Überstromschutzvorrichtung (D) einen Kompensationswiderstand (10) und/oder einen Kompensationskondensator (11) umfasst.

13. Verfahren zum Schützen eines Stromversorgungssystems, insbesondere eines Wechselrichters, vor Überstrom, wobei ein Eingangsstrom zumindest teilweise über einen ersten Stromweg mit einer ersten Sicherung (2.1) und zumindest teilweise über einen zweiten Stromweg mit einer zweiten Sicherung (2.2) fließt, wobei bei einem normalen Betriebsmodus ein erstes Stromregelelement (4.1) im zweiten Stromweg geschlossen ist, so dass der Strom im Wesentlichen gleichmäßig auf die beiden Stromwege verteilt wird, und bei einer Überstromsituation das erste Stromregelelement (4.1) geöffnet wird, so dass im Wesentlichen der gesamte Strom über den ersten Stromweg fließt, wodurch die erste Sicherung (2.1) unterbricht, und, nachdem die erste Sicherung (2.1) unterbrochen hat, im Wesentlichen der gesamte Überstrom durch die zweite Sicherung (2.2) fließt, wodurch die zweite Sicherung (2.2) unterbricht, und wobei es sich bei dem ersten Stromregelelement (4.1) um einen Transistor handelt, der mit der zweiten Sicherung (2.2) in Reihe geschaltet ist, **dadurch gekennzeichnet, dass** eine Bypass-Diode (5) mit dem ersten Stromregelelement (4.1) parallelgeschaltet ist, so dass, wenn die erste Sicherung unterbrochen hat und das erste Stromregelelement (4.1) ausgeschaltet ist, für den Überstrom ein um das erste Stromregelelement (4.1) herum führender Stromweg zur Verfügung steht.

14. Verfahren nach Anspruch 13, **dadurch gekennzeichnet, dass** eine dritte Sicherung (2.3) erst dann unterbricht, wenn die zweite Sicherung (2.2) unterbrochen hat.

## Revendications

1. Dispositif de protection contre les surintensités (D) pour une protection d'un système d'alimentation électrique, en particulier un onduleur, contre les surintensités, dans lequel le dispositif de protection contre les surintensités (D) comprend
a) un premier trajet de courant comprenant un premier fusible (2.1),
b) un deuxième trajet de courant comprenant un deuxième fusible (2.2),
dans lequel
c) le premier trajet de courant et le deuxième trajet de courant sont raccordés en parallèle entre une entrée (1) et une sortie (12) du dispositif de protection contre les surintensités (D),
d) un premier élément de régulation du courant (4.1) est agencé dans le deuxième trajet de courant, dans lequel le premier élément de régulation du courant (4.1) est configuré pour être fermé dans un mode de fonctionnement normal et le premier élément de régulation du courant (4.1) est configuré pour être ouvert dans une situation de surintensité et dans lequel le premier élément de régulation du courant (4.1) est un transistor et est raccordé en série au deuxième fusible (2.2),
**caractérisé en ce que**
e) une diode de dérivation (5) est raccordée en parallèle au premier élément de régulation du courant (4.1) de telle sorte que, lorsque le premier fusible est rompu et que le premier élément de régulation du courant (4.1) est mis hors tension, un trajet de courant autour du premier élément de régulation du courant (4.1) soit disponible contre les surintensités et
f) le dispositif de protection contre les surintensités (D) est configuré de telle sorte que, dans une situation où une surintensité se produit, essentiellement toute la surintensité circule d'abord à travers le premier fusible (2.1), provoquant la rupture du premier fusible (2.1) et après que le premier fusible (2.1) est rompu, essentiellement toute la surintensité circule à travers le deuxième fusible (2.2), provoquant la rupture du deuxième fusible (2.2).

2. Dispositif de protection contre les surintensités (D) selon la revendication 1, **caractérisé en ce que** le dispositif de protection contre les surintensités (D) comprend un troisième trajet de courant comprenant un troisième fusible (2.3).

3. Dispositif de protection contre les surintensités (D) selon la revendication 2, **caractérisé en ce qu'**un second élément de régulation du courant (4.2) est agencé dans le troisième trajet de courant, dans lequel le second élément de régulation du courant (4.2) est configuré pour être fermé dans un mode de fonctionnement normal et le second élément de régulation du courant (4.2) est configuré pour être ouvert dans une situation de surintensité.

4. Dispositif de protection contre les surintensités (D) selon l'une quelconque des revendications 2 à 3, **caractérisé en ce que** le dispositif de protection contre les surintensités (D) est configuré de telle sorte que, dans une situation où une surintensité se produit, le troisième fusible (2.3) se rompt seulement après que le deuxième fusible (2.2) s'est rompu.

5. Dispositif de protection contre les surintensités (D) selon l'une quelconque des revendications 2 à 4, **caractérisé en ce que** le troisième trajet de courant est raccordé en parallèle au premier trajet de courant et au deuxième trajet de courant et/ou le troisième fusible (2.3) est raccordé en parallèle au premier fusible (2.1) et au deuxième fusible (2.2) .

6. Dispositif de protection contre les surintensités (D) selon l'une quelconque des revendications précédentes, **caractérisé en ce qu'**une résistance (3) est raccordée en série au premier fusible (2.1).

7. Dispositif de protection contre les surintensités (D) selon l'une quelconque des revendications 3 à 6, **caractérisé en ce que** le second élément de régulation du courant (4.2) est un transistor et est raccordé en série au troisième fusible (2.3).

8. Dispositif de protection contre les surintensités (D) selon l'une quelconque des revendications 3 à 7, **caractérisé en ce que** le dispositif de protection contre les surintensités (D) est configuré de telle sorte que le premier élément de régulation du courant (4.1) et/ou le second élément de régulation du courant (4.2) soient mis en fonctionnement par une tension domestique (U).

9. Dispositif de protection contre les surintensités (D) selon la revendication 8, **caractérisé en ce que** le dispositif de protection contre les surintensités (D) est configuré de telle sorte que le premier élément de régulation du courant (4.1) et/ou le second élément de régulation du courant (4.2) soient conducteurs lorsque la tension domestique (U) est activée.

10. Dispositif de protection contre les surintensités (D) selon l'une quelconque des revendications 8 à 9, **caractérisé en ce qu'**une grille (6.1) du premier élément de régulation du courant (4.1) et/ou une grille (6.2) du second élément de régulation du courant (4.2) sont raccordées à une entrée de tension domestique (U).

11. Dispositif de protection contre les surintensités (D) selon la revendication 10, **caractérisé en ce que** la grille (6.1) du premier élément de régulation du courant (4.1) et/ou la grille (6.2) du second élément de régulation du courant (4.2) sont raccordées à l'entrée de tension domestique (U) par le biais d'une diode de raccordement (7) et/ou d'une diode Zener de raccordement (8) et/ou d'une résistance de raccordement (9).

12. Dispositif de protection contre les surintensités (D) selon l'une quelconque des revendications précédentes, **caractérisé en ce que** le dispositif de protection contre les surintensités (D) comprend une résistance de compensation (10) et/ou un condensateur de compensation (11).

13. Procédé pour protéger un système d'alimentation électrique, en particulier un onduleur, contre les surintensités, dans lequel un courant d'entrée circule au moins partiellement à travers un premier trajet de courant comprenant un premier fusible (2.1) et au moins partiellement à travers un deuxième trajet de courant comprenant un deuxième fusible (2.2), dans lequel, dans un mode de fonctionnement normal, un premier élément de régulation du courant (4.1) dans le deuxième trajet de courant est fermé de telle sorte que le courant soit réparti essentiellement de manière égale entre les deux trajets de courant et, dans une situation de surintensité, le premier élément de régulation du courant (4.1) est ouvert de telle sorte qu'essentiellement tout le courant circule à travers le premier trajet de courant, provoquant la rupture du premier fusible (2.1) et, après que le premier fusible (2.1) est rompu, essentiellement toute la surintensité circule à travers le deuxième fusible (2.2), provoquant la rupture du deuxième fusible (2.2) et dans lequel le premier élément de régulation du courant (4.1) est un transistor et est raccordé en série au deuxième fusible (2.2), **caractérisé en ce qu'**une diode de dérivation (5) est raccordée en parallèle au premier élément de régulation du courant (4.1) de telle sorte que, lorsque le premier fusible est rompu et que le premier élément de régulation du courant (4.1) est mis hors tension, un trajet de courant autour du premier élément de régulation du courant (4.1) soit disponible contre les surintensités.

14. Procédé selon la revendication 13, **caractérisé en ce qu'**un troisième fusible (2.3) se rompt seulement après que le deuxième fusible (2.2) est rompu.
